# EUROPEAN PATENT APPLICATION

(11) **EP 4 564 260 A1**
(43) Date of publication of application: **04.06.2025**
(21) Application number: 23213667.1
(22) Date of filing: 01.12.2023
(51) Int. Cl.: G06Q 10/10, G06Q 50/18

(54) **METHOD AND SYSTEM FOR AUTOMATED REVIEW OF DOCUMENTS TO BE CHECKED FOR COMPLIANCE BY USING A LARGE LANGUAGE MODEL**

(71) Applicant: Zeidler Legal and Regulatory Technologies LLC, Brooklyn, NY 11201 (US)
(72) Inventor: Zeidler, Arne, Brooklyn, NY 11201 (US); Mercer, Alexander, Phoenix Arizona, 85004 (US); Sherwood, Peter, Dublin 2, D02 X658 (IE); Goldberg, Serena, 60325 Frankfurt am Main (DE)
(74) Representative: Keil & Schaafhausen Patentanwälte PartGmbB

(57) **Abstract**

The present invention relates to a method for automated review of documents (200) to be checked for compliance by using a large language model. The method comprises the steps of providing a collection of legal questions (202) to an electronic question generator system (300); receiving, with the question generator system (300), electronic document data representing at least a part of a document (200) to be reviewed; generating (140), with the question generator system (300), at least one question message (240) for the large language model based on at least one part of the document data and at least one of the legal question (202) from the collection of legal questions (202); providing the question message (240) from the question generator system (300) to the large language model for processing the question message (240) in view of reference material (230); and receiving, with the question generator system (300), a response of the large language model to the question message (240). The invention further relates to a system for performing such method.

## Description

### BACKGROUND OF THE INVENTION

The present invention relates to a method for automated review of documents to be checked for compliance by using a large language model and a question generator system for performing such method. It is particularly applicable to the review of marketing materials.

Compliance (or regulatory compliance) describes the goal that organizations aspire to achieve in their effort to ensure that they are aware of and take steps to comply with relevant laws, policies, and regulations. Due to the increasing number of regulations and the need for operational transparency, organizations are increasingly looking for consolidated, harmonized and (time and cost) efficient sets of compliance controls to ensure that all necessary governance requirements can be met without the unnecessary duplication of effort and activity.

One area with a need for such compliance control is the field of fund managing. Just like in any other business, fund managers use marketing materials to advertise their products or, more precisely, find investors for their funds. Marketing materials can be documents like brochures, presentations, flyers, and factsheets. These documents typically contain 2 to 6 pages in length and comprise information regarding the fund, its investment policy, the fund manager, the fund's top holdings, performance, and the like. The content and the design of such marketing materials are subject to several laws and regulations. The fund manager must follow them when drafting such marketing materials. The regulations may differ in various jurisdictions.

In the European Union, in the field of fund managing, the most relevant regulations for drafting marketing materials are the ESMA Guidelines on marketing communications under the Regulation on cross-border distribution of funds ("ESMA Guidelines"). The ESMA Guidelines and other relevant laws and regulations are interpreted by legal experts like attorneys or specialists. Before a piece of marketing material can be used, a legal expert should have reviewed it and should have confirmed that the document complies with the relevant laws and regulations.

The current practice is as follows: The fund manager submits the marketing materials to an internal or external legal expert for review and clearance. The compliance check typically involves fully manual efforts of the legal expert. Such a manual compliance check can be very time consuming. Nevertheless, the marketing material is submitted to the legal expert at very short notice often, e.g. on the day before the marketing material should be used in a presentation for clients. This puts the legal expert under intense pressure to provide the review and the clearance in a short period. In addition to the time constraints, the review - especially the fast review - is very cost-intensive.

It is known from some different applications that new large language models (LLMs) can be powerful tools for assisting with the review of documents. They may be used to assist in review processes to reduce the time and cost each review takes.

LLMs are large generative language models with artificial intelligence that are pretrained with huge amounts of text data and then fine-tuned for specific tasks. On the basis of predictions and probabilities, LLMs can process, "understand", and generate natural language. Thus, LLMs are suitable for numerous applications. They provide the functional basis for Al chatbots such as, for example, ChatGPT.

An LLM acquires its basic skills during training (unsupervised learning), wherein it analyzes text sequences of huge amounts of text data. It recognizes patterns and learns the relationships and dependencies of the words in various texts. It adjusts parameters of the neural network, such as weights or threshold values of the neurons and neuron connections, so that it can best predict probabilities for words and word sequences. The training continues and the parameters are optimized until the best possible accuracy is achieved. The LLMs store their actual "knowledge" and "skills" in many billions of parameters that are set during training. After the basic training of an LLM, the model is fine-tuned to be trained and adjusted for certain tasks and specific use cases, e.g., by being presented with the corresponding solutions for specific tasks. The LLM adjusts some of its parameters accordingly.

However, in the current state of the art, particularly regarding the review of marketing materials, there are merely basic machine-aided attempts that provide a low-level analysis, such as searching keywords within the document or identifying key phrases. This is mainly because of constraints of presently accessible LLMs.

One constraint is that not every LLM can understand charts and graphs, which regularly form part of marketing materials. Even though it is possible to make inferences based on ingested text, this is not an ideal replacement for image identification and review.

Another constraint lies in token limits, especially for common users without special access or special user accounts. Tokens are basic units of text of code that LLMs use to process and generate language. These can be individual characters, parts of words or parts of sentences, depending on the chosen tokenization method or scheme. Tokenization is the process of splitting the input (and/or output) texts into smaller units that are stored in memory before they are processed by the LLM. The larger number of tokens, the more memory is required, so that LLMs limit the number of tokens they can process. An LLM model size is defined by the number of input tokens it can accept. Any contextual information outside the maximum token window is not considered during processing and might limit the results. It also hinders users with large text documents for processing. Currently, due to token limits, documents which are longer than 3 pages cannot be handled, meaning that longer documents have to be cut into chunks of 1 to 2 pages and that the review results per chunk need to be stitched together after the process has run. This requires additional business logic, which can be quite complex.

All these constraints hinder the user to fully utilize the power of LLMs to provide feedback on the compliance of their marketing material, particularly, as the marketing material has to be pre-processed before feeding it to the LLM (e.g. by extracting text and/or chart or image information), and, as token limitations are frequently breached.

The present invention aims for overcoming these constraints. In more detail, the object is to provide a method for review of documents that allows the user to fully utilize the power of LLM by combining the capabilities of LLMs with an expert overlay, while results are obtained with increased speed, under lower costs, with a high accuracy and secure data processing. The object is further to provide a system for organizing marketing materials in accordance with various statues while providing an interface for users to upload their marketing materials without the need of sending it to various recipients, thereby improving safety, speed, and consistency. A streamlined review process is provided.

The above problem is solved by a method for automated review of documents to be checked for compliance by using a large language model according to claim 1 and a question generator system for performing such method according to claim 14. Advantageous embodiments of the invention are subject to the dependent claims.

### SUMMARY OF THE INVENTION

A method for automated review of documents to be checked for compliance by using a large language model according to one aspect of the present invention comprises the steps of:
- providing a collection of legal questions to an electronic question generator system;
- receiving, with the question generator system, e.g. with an input module, electronic document data representing at least a part of a document to be reviewed (e.g. a document uploaded by the user);
- generating, with the question generator system, at least one question message for the large language model based on (e.g. including) at least one part of the document data and at least one legal question from the collection of legal questions;
- providing (e.g. electronically transmitting) the question message from the question generator system to the large language model for processing the question message in view of reference material; and
- receiving, with the question generator system, a response of the large language model to the question message.

The method exhibits a guided human-machine interaction for the user. The user does not operate the large language model (LLM) directly. The question generator system generates the input for the LLM. It automatically combines, by technical means, the most relevant questions and input for the LLM in the question message. It can automatically adapt and optimize the question message for correct, efficient, and fast processing with the LLM. The legal question(s) can be drafted by legal experts. They can be reviewed and adapted by technical experts for the LLM. The individual user is relieved of having to deal with, for example,
- how the legal question(s) must be drafted to be accepted and properly processed by the LLM,
- how the legal question(s) must be drafted for getting a reliable and meaningful output from the LLM,
- how the legal questions(s) must be phrased to properly address a legal aspect / compliance aspect to be checked, and
- how the legal question(s) and the marketing material must be composed together to obtain a more suitable input for the LLM that is likely to cause a valuable answer from the LLM.

The user does not interact with the LLM directly anymore. The question generator system forms, together with the LLM, a technical system. The legal question(s) and the electronic document data, optionally the reference material (at least in part) are received/stored by the question generator system and processed by the question generator system to generate the question message. The question generator system communicates with the LLM to input the question message to the LLM. The question generator system also receives the response from the LLM.

The collection of legal questions includes at least one legal question. Especially, the collection of legal questions may include a plurality of (different) legal questions.

In one embodiment, the method further comprises the step of generating, with the question generator system, and based (at least) on the received response of the large language model, user output data. The question generator system may process the response from the LLM and generate the user output data based on the response. According to one aspect, the questions generator system may "translate" the response from the LLM to user output data that can be understood by the user more easily. Additionally or alternatively, the question generator system can shape a format of the user output data.

In one embodiment, the question generator adds the reference material, parts of the reference material, and/or data extracted from the reference material to the question message. This allows the LLM to compare the document data with the reference material, considering the at least one legal question. The question generator system can be configured to add only the most relevant parts of the reference material (or data extracted from the most relevant parts/the most relevant data extracted from the reference material).

The reference material may include, for example, any one of, several of, or all of the following:
- (at least parts of) relevant regulation(s),
- (at least parts of) relevant guidelines, and
- (at least parts of) relevant examples for good practice and/or bad practice.

In general, it is possible that the LLM already knows (at least parts of) the reference material. Naturally, in this case, there might be no need to include said (parts of) the reference material in the question message again.

According to one aspect, the method comprising optimizing the collection of legal questions for feeding the large language model. The legal questions are primarily designed by legal experts. They shall ensure that the LLM actually considers the relevant legal aspects and provide a reliable result. Apart from that, a "wording" of the respective legal question may be adapted for efficient processing by the LLM. Optimizing the legal question(s) may include an iterative element. It may include reinforcement learning from human feedback (RLHF).

In one embodiment, the method further comprises the step of automatically identifying, with the question generator system and based on the document data, a document type of the document. Especially, the question generator system can do this before generating the question message. Hence, the question generator system is able to specifically select the at least one legal question and/or the (parts of) the reference material that are particularly relevant for this type of document. The question generator system may comprise or use a specific input module/process for the identification.

In one embodiment, the collection of legal questions pre-stored in the question generator system. Thus, the question generator system can access the legal question(s) easily and fast.

In one embodiment, a user data interface of the question generator system
- prompts the user to select (e.g. collection of legal questions or from a reduced list showing only some of the collection of legal questions) the at least one of the legal questions and/or
- prompts the user to confirm a suggestion for the at least one legal question.

The question generator system may determine the suggestion based on one of, several of, or all of the following:
- The document type of the document represented at least in part by the document data,
- user input regarding the document, for example the intended use of the document, relevant jurisdiction(s) for the document, intended recipients/audience of the document, Environmental, Social and Governance (ESG), an origin of the document, a purpose of the document....
- prior review results regarding the document (the document data),
- legal questions used for prior review(s) of the document (the document data),
- a user type,
- user rights, and
- user profession.

ESG is a set of aspects considered when investing in companies, that recommends taking environmental issues, social issues, and corporate governance issues into account. An environmental aspect could be that data is reported on climate change, greenhouse gas emissions, biodiversity loss, deforestation/reforestation, pollution mitigation, energy efficiency or water management. A social aspect could be that data is reported on employee safety and health, working conditions, diversity, equity, inclusion, conflicts, or humanitarian crises. The social aspect may be particularly relevant in risk and return assessments directly though results in enhancing or destroying customer satisfaction or employee engagement. The governance aspect could be that data is reported on corporate governance such as preventing bribery, corruption, diversity, executive compensation, cybersecurity, privacy practices or management structure.

Accordingly, the reduced list can be automatically generated based on/determined with considering one of, several of, or all of the aspects mentioned directly above.

The question generator system may be configured to prompt the user for providing the necessary input in a preceding step.

In one embodiment, automatically generating the at least one question message is further based on user statement information including specifications regarding the response from the large language model. This allows increasing the efficiency.

In one embodiment, the method further comprises at least one of the following:
- vectorization of the document data and vectorization of the at least one legal question (e.g. with the question generator system), wherein automatically generating the question message includes comparing the vectorized at least one legal question and the vectorized document data in order to extract the at least one part of the document data from the document data and/or at least one relevant legal question; and
- vectorization of the reference material and vectorization of the at least one legal question (e.g. with the question generator system), wherein automatically generating the question message includes comparing the vectorized at least one legal question and the vectorized reference material in order to extract at least one relevant part from the reference material and/or at least one relevant legal question.

The respective comparison is performed by the question generator system. This allows to include only those parts of the document data and/or only those parts of the reference data which are susceptible to be relevant with regard to the at least one (relevant) legal question. This helps to make the question message short and to keep it within the model size restrictions of the LLM.

Additionally or alternatively, the method may comprise:
- vectorization of the document data and vectorization of the reference material (e.g. with the question generator system), wherein automatically generating the question message includes comparing the vectorized document data and the vectorized reference material in order to extract the at least one part of the document data from the document data and/or at least one relevant part from the reference material.

The comparison is performed by the question generator system. This allows to include only those parts of the document data and/or only those parts of the reference data which are susceptible to be relevant with regard to each other. This helps to make the question message short and to keep it within the model size re-strictions of the LLM.

In one embodiment, the question generator system, after having received the response from the large language model, sends the response to a secondary large language model for determining if the response indicates compliance or non-compliance. In particular, the question generator system may send the response from the large language model to the secondary large language model for determining whether the output indicates that the user needs do another task for achieving compliance or not. The question generator system may receive a secondary response from the secondary large language model. The question generator system can employ the secondary large language model for a classification of the document data and/or the response (first) large language model. It may also generate instructions for outputting the classification to the user (e.g. green classification for compliance and red classification if further task are necessary for achieving compliance).

According to one aspect, the question generator system, after having received the response from the large language model, sends the response to the secondary large language model for determining if (at least parts) of the response should be emphasized for the user.

In one embodiment, the message generator system, after having received the response of the large language model indicating non-compliance of the document (and/or of the secondary response from the secondary large language model indicating non-compliance of the document), generates and sends a recommendation message and/or a specific input request for the user to perform a new check of a revised version of the document.

In one embodiment, the question generator system extracts text and/or image information from the received document data for use in generating the question message.

In one embodiment, the question generator system
- initiates an initial tokenization of the extracted text and/or image information, wherein an initial number of tokens identified in the text and/or image information is returned, and
- compares the identified number of tokens to capacity standards for a plurality of large language models to automatically identify the one from the plurality of large language models with the most appropriate capacity standard for this document data as designated large language model,
- automatically selects the designated large language model for inputting the question message or prompting the user to confirm using the designated large language model.

In one embodiment, a maximum token limit is pre-set for at least one of the several large language models. This avoids selection of an inappropriate LLM.

The problem mentioned above is further solved by a question generator system for performing an automated review of documents to be checked for compliance by using a large language model, for example with a method according to any one of the modifications disclosed herein. The system may comprise:
- a memory storing a collection of legal questions;
- a user data interface allowing input of document data;
- a question generator configured for generating a question message for the large language model based on at least one part of the document data and at least one legal from the collection of legal questions;
- a large language model interface configured to access at least the language model for providing the question message the large language model for processing the question message in view of the reference material and for receiving a response of the one large language model to the question message.

The embodiments and advantages described with the method apply accordingly and vice versa.

The legal question(s) may be adapted for the large language model.

The legal question(s) can be stored in vectorized form.

In one embodiment, the system additionally includes a tokenizer.

### BRIEF DESCRIPTION OF THE DRAWINGS

FIG. 1 is a diagram depicting the flow of data from and to the question generator according to one embodiment.
FIG. 2 is a diagram showing components of a system according to one embodiment.
FIG. 3 is a diagram showing processing steps of data while performing a method according to one embodiment.
FIG. 4 is a diagram depicting the method steps of identifying one or more relevant legal questions according to one embodiment in chronological order.
FIG. 5 is a diagram showing the processing of data during single method steps according to one embodiment.
FIG. 6 is a diagram showing the method steps according to one embodiment.
FIG.7 is a diagram depicting the interface of the user device according to one embodiment.

### DESCRIPTION OF THE PREFERRED EMBODIMENTS

Hereinafter, different embodiments of the present invention will be described with reference to the drawings. Where reference is made to a document to be reviewed or an (electronic) document, the corresponding description is applicable to marketing materials and vice versa. The terms document and document data are used synonymously (the document or marketing material may comprise or consist of document data). The document data may at least represent the document.

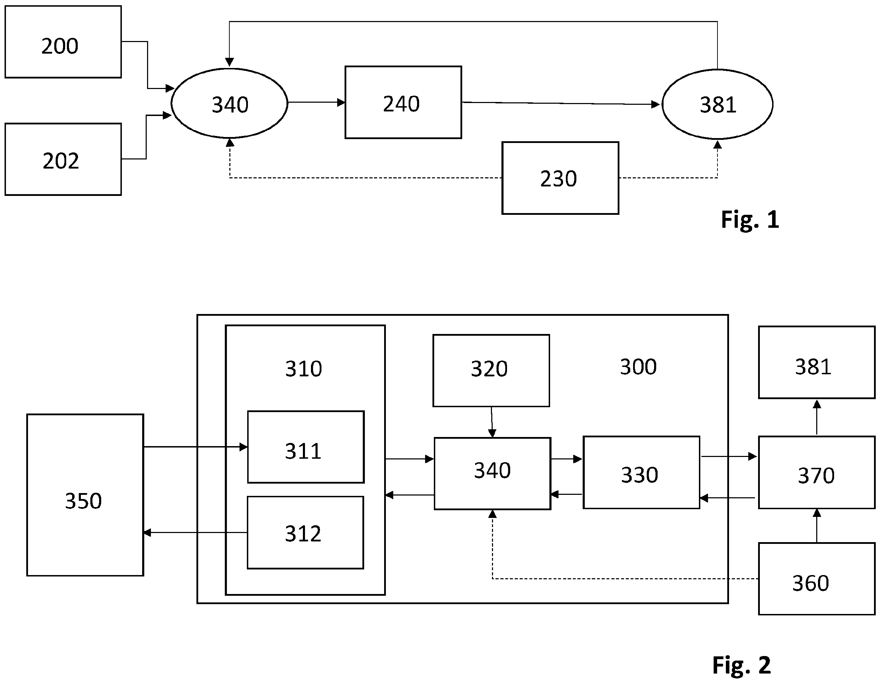

FIG. 1 is a diagram depicting the flow of data from and to a question generator 340 according to one embodiment. The question generator 340 forms a part of a question generator system 300 (the latter see Fig. 2). The question generator 340 combines data and/or information of different types. In more detail, it combines at least parts of a marketing material 200 (e.g. electronic document data representing at least a part of the marketing material 200), at least one legal question 202 regarding the conformity of marketing materials (in general) with regulations and/or guidelines and, optionally, at least parts of reference materials 230. The reference materials 230 may include such regulations and/or guidelines. Based on this combination, the question generator 340 generates a question message 240.

The question generator system 300 transmits the question message 240 to an LLM. The LLM may be one from a plurality of LLMs 380 that are accessible by the question generator system 300, in more detail a designated LLM 381. The designated LLM 381 may be selected from the plurality of LLMs 380 based on the individual question message 240.

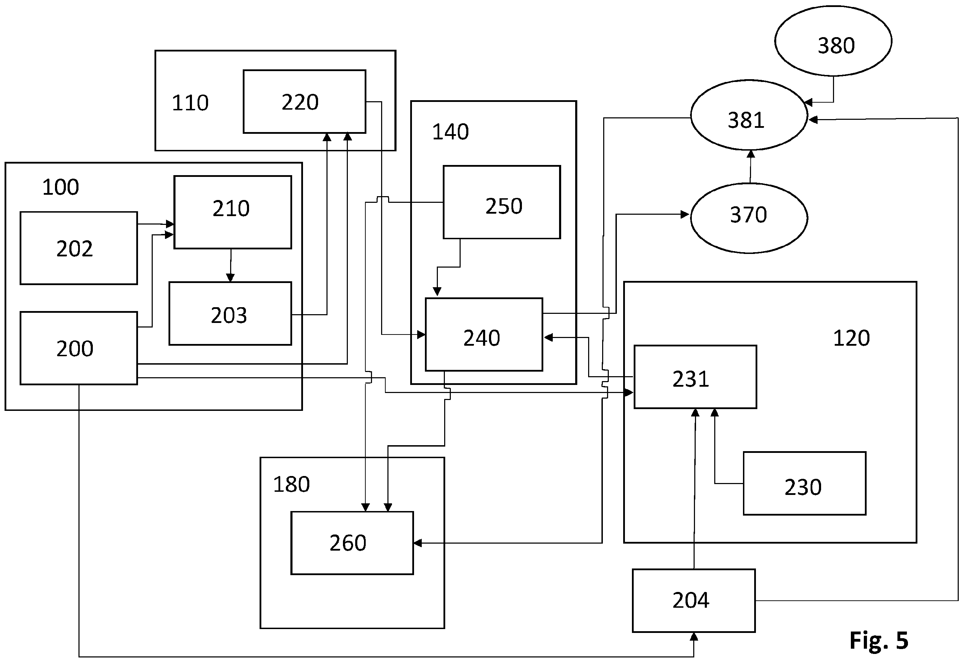

After having received the question message 240, the LLM processes the question message 240 and generates a response. The response is received with the question generator 340. Based on the received response of the LLM, the question generator 340 generates user output data 260 (see Fig. 5).

The marketing material 200 may be received by the question generator system 300 as electronic document data that may have a human- or machine-readable format.

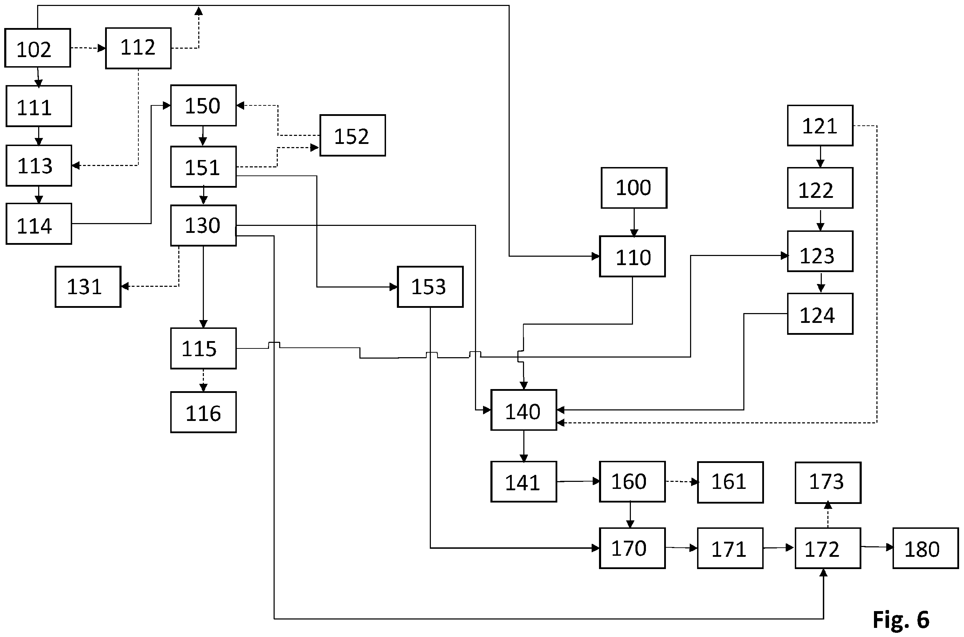

Depending on the marketing materials including images, charts, or the like (image data) and on the choice of accessible LLMs (plurality of LLMs 380), the marketing materials 200 may need to be pre-processed, e.g. by extracting text and/or image information (see an extraction step 112 in Fig. 6) from the document, before being forwarded to the question generator 340. It is also possible that relevant parts of the text and/or the image information are extracted to be processed. This is described in more detail below.

The question message generator 300 includes a collection of legal questions 202. The collection may include at least one legal question 202. In this embodiment, the collection includes a plurality of legal questions 202. The legal questions 202 are drafted by legal experts. The legal questions 202 are based on (and hence "include") legal knowledge. In addition, they are optimized for being processed by the LLM. An individual legal question 202 may comprise a main aspect or summary of requirements of a rule or regulation, a hint on what would be in line or not in line with said requirements, and/or an instruction on checking whether document data complies with the requirements and where to lay focus and/or what to tell the user in different cases. It can be optimized insofar as it resembles a specific user question (or a specific part of a marketing material) that would typically be asked. It can be optimized insofar that it resembles relevant wordings in the regulations for increasing the efficiency of the pre-vectorization comparison and/or for increasing the accuracy of the response expected from the LLM.

Accordingly, when the LLM processes a specific user request, the LLM may make use of at least one legal question 202 from the collection of legal questions 202.

The at least one legal question 202 may relate to a particular aspect and a compliance requirement and, as the specific knowledge incorporated in the at least one legal question 202 supersedes the general knowledge of the LLM due to its higher statistical proximity of the at least one legal question 202 to the user specific request (compared to that of the general knowledge of the LLM). The LLM may hence find a more precise response in shorter time.

The optimization process of the legal questions 202 may be a completely manual process, an LLM-based iterative prompting process performed with the LLM and/or a secondary LLM, or a machine-aided manual process.

The manual process may comprise that a legal expert (e.g. an attorney or specialist) in the field of compliance formulating the legal questions 202 on the basis of his/her knowledge and experience and providing it to the memory 320, a secondary memory of the question generator system 300, and/or an external database 360.

The LLM-based optimization process may begin with a meta-prompt as input. This meta-prompt may include a natural language description of the task at hand, along with a few examples of problems, placeholders for prompt instructions, and corresponding solutions. As the optimization process unfolds, the LLM may generate candidate solutions. These may be based on the problem description and the previous solutions included in the meta-prompt. The candidate solutions may then be evaluated, assigning each a quality score. Optimal solutions and their scores may be added to the meta-prompt, enriching the context for the next round of solution generation. This iterative process may continue until the LLM stops proposing better solutions.

The machine-aided manual process may be based on a primarily iterative development, with some reinforced learning from human feedback. In more detail, the process may resemble the LLM-based iterative prompting process but may differ from it in that the quality score is assigned by a human, particularly by asking the user, which in this case is the legal expert (e.g. attorney or specialist) whose task is to provide the optimized at least one legal question 202, to rank instances. The rankings may then be used to score outputs.

In every one of the above alternatives, providing and optimizing the at least one legal question 202 may be performed by a legal expert (attorney or specialist) instead of an engineer.

According to one aspects, in any case, the legal experts are involved in providing the collection of the legal questions 202 in order to ensure that all relevant compliance aspects are covered by at least one of the legal questions 202 and/or that the legal questions 202 are meaningful, clear, concise, and accurate in terms of compliance.

The collection of legal question 202 may be provided in electronic form. The legal questions 202 may be stored in the memory 320, for example on an electronic data storage. They may be provided by or stored in an application server and/or an additional server. It is possible that a completed or not completed set of at least one legal question(s) 202 is pre-stored and provided to the question generator 340 as a whole. Alternatively, especially in the case of a plurality of legal questions 202 being part of the collection, it is possible that only a selected number of legal questions 202 is provided to the LLM. A number of the legal questions 202 provided to the question generator system 300 may be restricted. Alternatively, the user may be able to choose distinct legal questions 202 (e.g. based on the subject of the documents to be checked and/or relevant jurisdiction) or the question generator 340 may only be able to access a distinct group from collection of legal questions 202.

The reference material 230 may consist of, comprise, or be based on legal information such as regulations and/or guidelines. This legal information can be specific to marketing material in general but not question specific. I.e., it explains certain concepts or rules for marketing materials. Even though it may not be filtered by question-specific requirements such as particular rules, it may still be filtered by requirements of the particular marketing material 200 to be checked. For example, if a particular marketing material 200 should be used in Spain, the reference material 230 pertaining to the rules applicable in Spain will be used.

Optionally, the reference material 230 or at least a part thereof is provided to and/or stored in the question generator 340. The question generator 340 can include parts of the reference material in the question message 240.

The reference material 230 may serve the LLM as additional legal information for generating a response to the question message 240. Depending on whether it is provided to the question generator 340 to be included in the question message 240 to be asked against the LLM or provided directly to the LLM, the reference material 230 may be processed and/or filtered by the question generator 340 or by the LLM.

Processing of the question message 240 may make use of one of or several of a plurality of LLMs 380. Possibly, the known language models GPT 3.5 and/or GPT 4.0 may be used.

In one embodiment, the LLM is already trained and fine-tuned for processing the question message 240 based on its already available knowledge. In another embodiment, the LLM is configured to access reference materials 230 that are stored in the memory 320, in a secondary memory of the question generator system 300, and/or in the external database 360, and to process the question message 240 in view of these reference materials 230. In a further embodiment, the reference material 230 is fed to the question generator 340 and consequently considered in the combination of data and generating the question message (e.g. in a question message generation step 140), so that the reference material 230 or a relevant part 231 of the reference material 230 is provided together with or as a part of the question message 240 to the LLM as a source to base its response on. In this case, the reference material may also be stored in the memory 320, the secondary memory, and/or the external database 360.

FIG. 2 is a diagram showing components of a system according to one embodiment. The question generator system 300 may include an application server system comprising at least one server, the application server system comprising the memory 320, a user data interface 310, the question generator 340, and an LLM interface 330. At least one user device 350 may be provided that is in communication with the question generator system 300 via the user data interface 310. The at least one user device 350 may be part of the question generator system 300 or a separate module. The question generator system 300 may be in communication with at least one API 370 for the LLM 381 via the LLM interface 330. An external database 360 may be provided that can be accessed by the API 370 for connecting the LLM to the external database 360 and/or the question generator system 300.

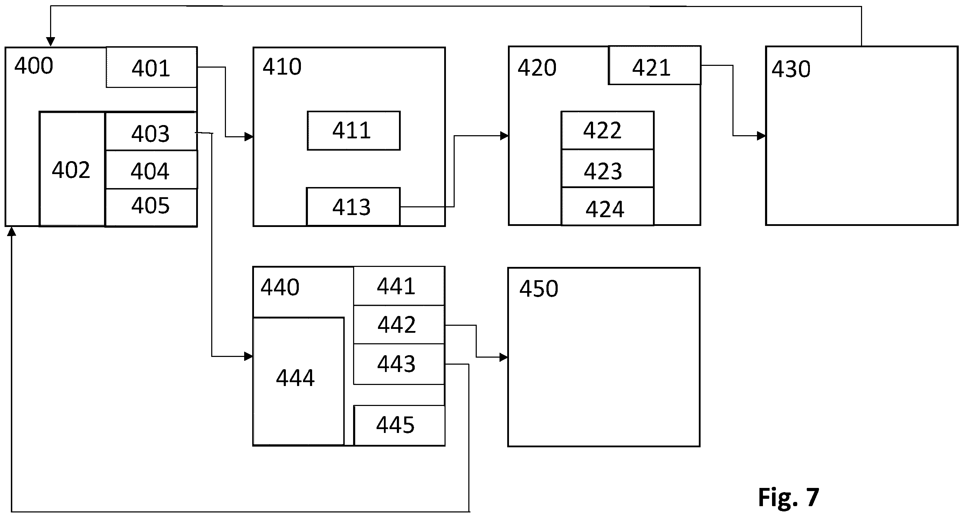

According to one aspect of the invention, marketing materials 200 are uploaded by a user via the at least one user device 350. The user device 350 may be an end user device like a personal computer (PC), e.g., a desktop PC or laptop, a consumer device, e.g., a personal digital assistant or a smart phone, or a removable storage medium that can store information, e.g., an USB flash drive, a memory card, an external hard drive, a writeable CD or DVD. It can also be a server and/or cloud that can be accessed by the user. An embodiment of an interface of the user device 350 and an example for a communication between user and the user device 350 are explained in more detail with regard to FIG. 7.

The at least one user device 350 may be configured for communication with the user data interface 310 of the question generator system 300. In one embodiment, the user data interface 310 is configured for communication with a plurality of different user devices 350. It is understood that the question generator system 300 can include the application server that is assessable by a plurality of clients such as the user device 350. The user data interface 310 comprises the input module 311 for input of document data and the output module 312 for outputting result data (user output data 260) for the user.

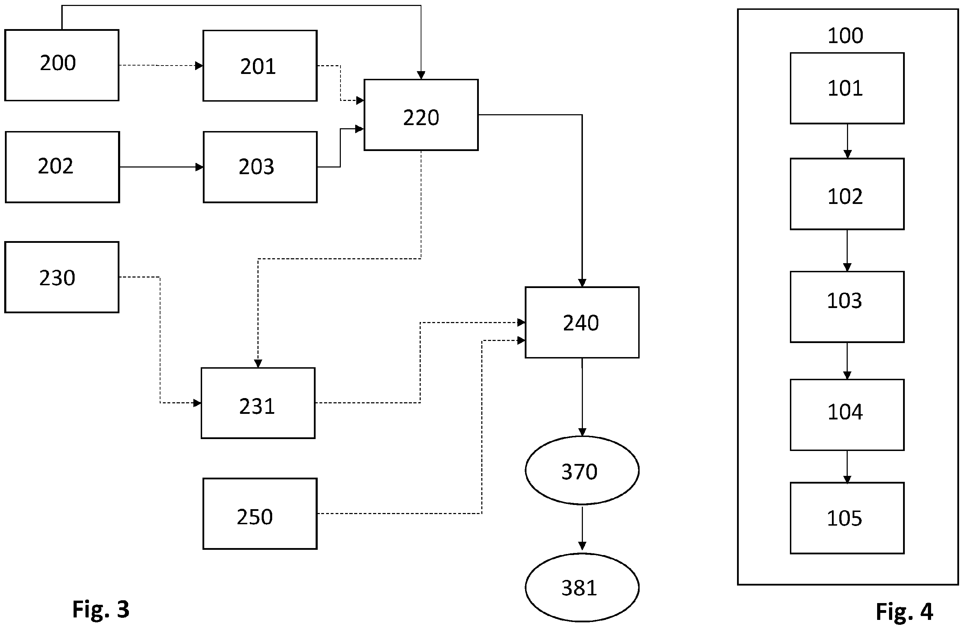

The input document data may consist of or comprise the whole marketing material 200 to be reviewed, or parts thereof. Parts to be input may result from extracting text and/or image information (from the marketing material 200 (see the extraction step 112 in Fig. 6) or restricting the marketing material 200 to parts that need to be checked. Such preprocessing can be done manually or by using the LLM or a secondary LLM that can be instructed to pre-filter the documents, e.g., by extracting text and/or image information (see extraction step 112), or by filtering for parts of the document including particular keywords or key phrases. The input data may further include the user statement information 250. This is explained in detail with regard to FIG. 3.

The user output data 260 may consist of or comprise the response of the LLM alone or together with at least parts of the information on basis of which the question message 240 was generated (such as legal questions and/or document data) and/or the question message 240 itself. Alternatively, it may consist of or comprise a marked-up version of the input document 200 with hints or comments for the user, generated by the question generator system 300 based on the response of the LLM alone or in combination with at least parts of the information on basis of which the question message 240 was generated and/or the question message 240 itself. Typically, the question generator system 300 will process the response from the LLM 381, re-design it an rephrase and/or comment it such that the user better understands the meaning and/or implications of the response from the LLM 381.

The memory 320 may be a centralized database and may configured to store the collection of the legal questions 202. It may also be configured to store at least parts of the reference material 230 and/or at least parts of the marketing materials 200 and/or at least parts of the user statement information 250 and/or any intermediary outputs (cf. method steps 116, 131, 161, 173). Alternatively, the memory 320 may be a decentralized database, such as a cloud, that can be accessed by the question generator 340. The memory 320 may be configured to be accessed by the user and/or the legal expert for storing, deleting, or amending the stored information. It is possible that only users or legal experts above a particular authorization level may access the memory 320. This prevents that unexperienced users can impair the functionality. Accessing the memory 320 may be possible directly via the user device 350 or via the user data interface 310 as an intermediary module.

The question generator 340 may include at least one processing device, e.g. at least one microprocessor. It is configured to exchange data with the user data interface 310, particularly, to receive the input data from the input module 311 and to provide user output data 260 to the output module 312. It is further configured to access the memory 320 for loading the at least one legal question 202 that may be pre-stored in the memory 320 in electronic form, e.g., on an electronic data storage. It may be configured to access and/or communicate with the external database 360 for loading the data stored there. If a secondary memory is provided within the question generator system, the memory 320 may also be configured to access and/or communicate with the secondary memory.

The question generator 340 is configured for, based on the received data, generating the question message 240 (e.g. in a question message generation step 140) and communicating it to the LLM interface 330 which communicates it to the API 370 (step of sending question message to API 141). The API 370 connects the LLM to the LLM interface 330 for bilateral communication with the question generator 340. It may also connect the LLM to the external database 360 for accessing the reference material 230. After having generated a response, the LLM communicates the response to the LLM interface 330 via the API 370. From the LLM interface 330, the response is communicated to the question generator 340.

According to one embodiment, the system additionally includes a tokenizer. The tokenizer may be configured to perform tokenization 113 of the input data. It may be a part of the user data interface 310 or a separate entity of the question generator system 300 interposed between the user data interface 310 and the question generator 340. The tokenizer may be configured to store the tokenized data in a memory which can be the memory 320 in which the at least one legal question 202 is stored or the secondary memory.

FIG. 3 is a diagram showing processing steps of data while performing a method according to one embodiment.

The question message 240 is based on a combination of at least parts of the marketing material 200 and at least one legal question 202. This combination is present in the form of an input query 220. The input query 220 consists of the at least one legal question 202 that may be at least one relevant legal question 203 and either the complete marketing materials 200 or parts of it.

Particularly, text and/or image information may be extracted from the document 200 in the extraction step 112, forming the extracted text and/or image information 201 of the document 200. The extraction step 112 may be performed manually or by using the LLM or a secondary LLM.

The at least one relevant legal question 203 is of particular relevance regarding the marketing material 200 to be checked. The relevance of an individual legal question 202 may depend on the document type of the document (which is represented at least in part by the document data), an additional user input regarding the document, e.g. an intended use of the document, relevant jurisdiction(s) for the document, intended recipients/audience of the document, environmental, social and governance aspects (ESG), an origin of the document, a purpose of the document or the like, a prior review result regarding the same document, legal questions used for prior review(s) of the document, a user type, user rights (user authorization level), and/or a user profession. A process of identifying one or more relevant legal questions 100 is described in more detail in the description of FIG. 4.

Based on the input query 220 consisting of the at least one legal question 202 (that may be, in more detail, the at least one particularly relevant legal question 203) and at least part of the document data, together with the reference material 230, and optionally the user statement information 250, a relevant part of the reference material 230 (relevant reference material 231) may be identified. The process/step of identifying relevant reference material 120 is described in more detail together with the identification of the relevant legal question 203 in the description of FIG. 4.

In addition to the input query 220 - and optionally the reference material 230 or the relevant reference material 231 - , the question message 240 may include at least parts of the user statement information 250. The user statement information 250 may include specifications regarding the response from the LLM. In more detail, it is not a question that the LLM needs to answer, but it can rather be used to instruct the LLM to respond to the question message 240 in a certain way (e.g. format). For example, within the user statement information 250, instructions or additional non-material information such as words to avoid, context to consider, how the answer should look, etc. may be provided. The user statement information 250 may also be taken into account when identifying the relevant reference material (in the step of identifying relevant reference material 120).

The question message 240 is then sent to the API 370 (step of sending question message to API 141) for communicating it to the LLM.

FIG. 4 is a diagram depicting the process of identifying the one or more relevant legal questions 100 according to one embodiment in an exemplary chronological order in more detail. The process of identifying the one or more relevant legal questions 100 may include the steps of accessing the legal questions 101, receiving the document 102, breaking the document into chunks 103, comparing each document chunk to each legal question 104 and, based on said comparison, selecting the one or more relevant legal questions 105. All the method steps are performed by the question generator 340 and within the question generator system 300.

In more detail, for accessing the legal questions 101, the question generator 340 may access the memory 320, the secondary memory or the external database 360, depending on where the at least one legal question 202 is stored or pre-stored. In a similar manner, the question generator 340 may receive the document 102 to be checked from the user data interface 310 or, if the received document data have been saved in the memory 320, the secondary memory or the external database 360, from the respective storage. Breaking the document into chunks 103 means tokenizing the document 200 in order to obtain parts of the document for vectorization. Comparing each document chunk to each legal question 104 is then performed between vectorized data sets.

Vectorization means that complex data such as text or image data is converted into highdimensional vectors so that similar items (tokens) are closer to each other in the vector space. Accordingly, for the process of identifying the one or more relevant legal questions 100, every vectorized legal question from the provided at least one legal question 202 is compared to every vectorized chunk of text 104. The chunks may be determined, e.g., on the basis of a distinct number of letters, words, or phrases. The comparison of the particular vectorized at least one legal question 202 and the vectorized chunks will lead to particular similarity levels. A high level of similarity means that there is a high probability that the respective legal question has content that is similar to or relates in a high degree to the respective text chunk. A low level of similarity means that there is a low probability of relating content. Accordingly, based on the respective level of similarity of the individual legal questions from the at least one legal question 202, the relevant legal questions 230 that are probably particularly relevant for the respective text chunks and thus for the whole marketing material 200, can be filtered. Including only these filtered relevant legal questions 203 in the question message 240 to be asked against the LLM reduces the time consumption of the LLM because less legal need to be checked. Also, the token limits of the LLM are less likely to be breached.

Vectorization is performed by the question generator system 300, for example by the question generator 340.

In a similar manner as described above, the question generator 340 may also be configured to include only at least one part of the document (relevant document chunks) into the question message 240.

Upon vectorization of the reference material 230 and vectorization of the at least one legal question 202, the legal questions that are relevant in view of the reference material 230 may be obtained. Based on this comparison, the number of relevant legal questions 203 to be included in the question message 240 may be further restricted (only legal questions that were obtained based on the comparison of legal questions 202 and the reference material 230 and/or the document 200) so that only a distinct number of the most relevant legal questions 203 may be considered.

Additionally or alternatively, upon vectorization of the document data and vectorization of the reference material 230, relevant parts of document data and/or relevant reference material 231 may be identified to additionally be considered in the question message generation step 140 (e.g. by being included into the question message 240), or to restrict the relevant document data or relevant reference material 231 to be considered.

The process of identifying the one or more relevant legal questions 100 and considering it when generating the question message in step 140 may be performed completely automatic. Alternatively, the question generator system 300 may be configured to, after having identified the at least one relevant legal question 203, prompt the user to confirm a corresponding suggestion for the at least one relevant legal question 203. Additionally or alternatively, the question generator system 300 may prompt the user to select at least one of the at least one legal question 202, e.g. from a list comprising all of the at least one legal question 202 or from a list comprising all of the at least one legal question 202 ranked from high to low similarity compared to the document 200 and/or the reference material 230 or from a reduced list showing only some of the at least one legal question 202, wherein the reduced list is automatically generated based on the similarity compared to the document and/or the reference material 230 and including only the ones from the at least one legal question 202 starting from a distinct degree of similarity.

It is noted that the selection of the legal question(s) to be finally included in the question message 240 can be performed in two stages. The first stage can include "pre-"selection (or "coarse selection") of the legal question(s) 202 for forming the input query 220, e.g. selecting the legal question(s) 202 based on user selection, document type, and/or the likes. The second stage can include further fine-selection of the relevant legal question(s) 203 (out of the legal questions 202 remaining after the coarse-selection) by the "pre-vectorization comparison", in which the actual "similarity" between the pre-selected legal questions 202 and particular text chunks and/or the particular parts of the reference material 230 is checked in more detail.

In the same manner, the user may also be prompted to select parts of the document and/or parts of the reference material 230 and/or prompted to confirm a suggestion for parts of the document and/or parts of the reference material 230.

FIG. 5 is a diagram showing the processing of data during single method steps according to one embodiment. The process of identifying the one or more relevant legal questions 100 includes processing the at least one legal question 202 and the document via a question loop 210 that is part of the question generator 340 and performs the vectorization and comparison and outputs the at least one relevant legal question 203.

In the method step of generating the input query 110, the at least one relevant legal question 203 and at least a part of the document data are combined to form the input query 220.

In the method step of identifying the relevant reference material 120, by accessing the reference material 121 that may be stored in the memory 320, in a secondary memory within the question generator system 300 or in an external database 360, vectorizing the reference material 122, and comparing the vectorized reference material to the vectorized at least one legal question 202 and/or the vectorized document or vectorized document chunks 123, the relevant reference material is generated (step of generating relevant reference material 124).

In the method step of generating the question message 140, the input query 220 and optionally the user statement information 250, and optionally the relevant reference material 231 are combined to form the question message 240.

The question message 240 is then sent to the API 370 (step of sending question message to API 141) that communicates it to the designated LLM 381.

The designated LLM 381 is one out of a plurality of (accessible) LLMs 380 that has the most appropriate capacity standard for the present query. It is obtained by the question generator 340 in the following manner.

The question generator system 300 performs an initial tokenization 113 of the document, particularly, if applicable, the extracted text and/or image information 201, wherein an initial number of tokens 204 in the text is identified and returned. The identified number of tokens 204 is then compared to capacity standards for several (at least two) different (accessible) LLMs from the plurality of LLMs 380. The one of the plurality of LLMs 380 with the most appropriate capacity standard is then automatically identified as the designated LLM 381 (step of identifying designated LLM 150). This identification is based on pre-defined rules. The question generator 340 then automatically selects the designated LLM 381 for inputting the question message 240 (step of selecting designated LLM 151). Optionally, the question generator 340 informs the user which LLM is the designated LLM 381, prompts the user to confirm a suggestions for the designated LLM 381. In one embodiment, the question generator 340 prompts to user to choose the designated LLM 381 from a reduced list of possible LLMs 380. The reduces list may be automatically generated based on pre-defined rules.

In one embodiment, a maximum token limit is pre-set for at least one of the plurality of LLMs 380.

FIG. 6 is a diagram showing the method steps according to one embodiment. The document is received (document reception 102) and may subsequently be identified (document type identification 111). In more detail, the question generator system 300 may automatically identify, based on the document data, the document type of the document. Automatically identifying the document type (i.e. an automatic document type identification 111) may particularly be performed by the user data interface 310, or, more precisely, by the input module 311. The type of document may relate to a material type, such as fact sheet, brochure, presentation, social media post, or to a jurisdiction.

The received document may be subject to extraction of text and/or image information (extraction step 112 in Fig. 6). After the document type identification 111 and/or the extraction step 112, the document, or the extracted text and/or image information 201 are tokenized (tokenization 113). If a token limit is pre-set, it is checked (checking token limit 114). If said token limit is breached 114 and the designated LLM 381 is identified (step of selecting designated LLM 150) and selected (step of selecting designated LLM 151). In the case that the user is prompted to confirm the suggestion for the designated LLM 381 or to choose from a reduced list of possible designated LLMs 381, it may be possible that the token limit is adjustable by the user 152 and/or that another LLM can be chosen as designated LLM 381.

Then, the selected designated LLM 381 is loaded 153. At the same time, the user may be prompted to give a user statement information 250 that the question generator receives (step of receiving user statement information 130). The user statement information 250 may be saved in the memory 320, in the secondary memory or in the external database 131. The document is then parsed into a machine-readable format (step of parsing document into machine readable format 115) and may also be saved in the memory 320, the secondary memory or in the external database 360 (step of saving document in machine-readable format 116).

After identifying the one or more relevant legal questions (see reference sign 100 in Fig. 6), the input query is generated in step 110 based on the at least one relevant legal question 203 and the received document.

The reference material is accessed (step of assessing reference material 121), vectorized (step of vectorizing reference material 122), and compared to the vectorized document 123 to generate the relevant reference material (step generating relevant reference material 124).

The question message 240 is generated based on the generated input query 220 and optionally the received user statement information 250 and the relevant reference material 231. It may be possible to include further accessed reference materials 230 upon user request. The generated question message 240 is send to the API (step of sending question message to API 141) where it is vectorized (step of vectorizing question message 160).

The vectorized question message may be saved in the memory 320, in the secondary memory or in the external database 360 (step of saving vectorized question message 161).

The API 370 sends the vectorized question message to the loaded designated LLM 381 (step of sending vectorized question message to designated LLM 170).

The designated LLM 381 processes the vectorized question message (step of processing vectorized question message 171) in view of the (relevant) reference material 230, 231 that was sent as part of the question message 240 or separated from the question message 240, in view of reference material 230 that is stored in the memory 320, the secondary memory or the external database 360 that it accessed via the API 370 or in view of its knowledge from training. The results of the LLM are then formatted (step of formatting results 172), optionally taking into account the (optional) user statement information 250. The formatted results may be saved in the memory 320, in the secondary memory or in the external database 360 (step of saving formatted results 173). The formatted response is output (step of outputting formatted results 180).

FIG. 7 is a diagram depicting the interface of the user device 350 according to one embodiment. The user is able to access the system for automated review of document to be checked for compliance via the user device interface.

Clicking on the respective module within the user device interface leads to an access page, where the user can log in. It is possible that - together with the log-in data - a user profile is pre-stored in the module including information about the user such as an authorization level, a department, a background, an experience level, a profession, or the like. After the log-in, the user can access the homepage 400.

On the homepage 400, an upload document 401 button is provided, with which the user can upload the marketing material 200 to be checked for compliance. Within an information on current document table 402, information on the document 200 such as the material name, type of document, date of upload, version, status, or system approval may be displayed. In one embodiment, the user may choose or confirm suggestions regarding said information. The homepage 400 further includes a review feedback 403 button, where, in case of a document that has already been checked, the response obtained from the LLM can be reviewed, a preview document 404 button, where an already uploaded document can be previewed, and an upload revision 405 button, where, after a response from the LLM on a document that has already been checked has been received and the user has already revised the checked document taking into consideration the response of the LLM, the revised document can be uploaded again.

Clicking on the upload document 401 button leads the user to the upload page 410. On the upload page, the buttons select file for upload 411 and configure 413 can be chosen. By clicking on the select file for upload 411 button, the user can choose a file to upload, e.g., from the local memory of the user device 350 or a cloud database.

Clicking on the configure 413 button leads the user to the configuration page 420, where the user can select type of material 422 or select jurisdiction 423 manually, by choosing from a list of suggestions or by confirming a suggestion of the question generator system 300. By clicking on the additional considerations 424 button, any additional information, particularly, user statement information 250, can be added to be taken into consideration by the LLM upon processing. Via the submit 421 button, the user may submit the entered information. The processing page 430 is loaded. The display of the processing page 430 prevents the user from changing the document data from the time the question message 240 is generated until having received the response of the LLM to the question message 240.

After processing, the user is led back to the homepage 400. Upon clicking on the review feedback 403 button, the user is led to the review feedback page 440. There, it is possible to download feedback 441, report issue 442, return to homepage 443, view information on status of document 444, and view information on review 445. Upon clicking on the report an issue 442 button, the report issue page 450 can be accessed.

As the question system generator 300 may employ the designated LLM 381 several times for checking compliance of the single document, several response of the LLM 381 only relating to specific aspects may be received. The user might be overwhelmed or confused by the plurality of specific response from the designated LLM 381. The question system generator 300 hence may include a summarizing step. In the summarizing step, the question system generator 300 at least initiates generation of an easily understandable overview on whether the document fulfills compliance requirements (and/or optionally what parts of the document contravene compliance requirements, if any).

In one embodiment, after having received a response from the LLM, the question generator system 300 sends the response to a secondary LLM for generating instructions to the user based on the response(s) from the LLM 381. For example, the secondary LLM may be used to
- provide a summary regarding the compliance of the document;
- clearly classify (in a manner easily understandable for the user) whether the document fulfills the compliance requirements or not; and/or
- point out to the user which parts of the documents contravene compliance requirements and/or should be revised.

For example, the question generator system 300 sends (several of or all of) the response(s) from the designated LLM 381 relating to the same document to a secondary LLM for determining if the response(s) indicates compliance or non-compliance. However, the determination if the response indicates compliance or non-compliance may also be performed by the designated LLM 381. The corresponding result may be depicted in the form of a red (non-compliance) or green (compliance) flag that may be depicted within the information on current document table 402 or the review feedback 403 button or on the review feedback page 440. Alternatively, the user statement information 250 may already comprise instructions on providing a short information on (non-)compliance such as a flag.

In one embodiment, the question generator system 300, after having received a response of the LLM indicating non-compliance of the document, generates and sends a recommendation message and/or a specific input request for the user to perform a new check of a revised version of the document. This may be in the form of a prompting window or an information in the information on current document table 402. A maximum number of repetitions of performing the review method may be pre-set, e.g., to 3 or 4 times. The number of performed repetitions as well as the maximum number of repetitions may be displayed in the information on current document table 402 and/or on the review feedback page 440. After having performed the maximum number of repetitions, the user may either be prompted a recommendation message to consult a legal expert or a user with higher authorization level or may be informed that no further review process can be conducted.

### List of reference signs

- 100: Identifying one or more relevant legal questions
- 101: Accessing legal questions
- 102: Receiving document
- 103: Breaking document into chunks
- 104: Comparing each document chunk to each legal question
- 105: Selecting the at least one relevant legal questions
- 110: Generating input query
- 111: document type identification
- 112: extraction step (extracting text and/or image information from document)
- 113: Tokenization
- 114: Checking token limit
- 115: Parsing document into machine readable format
- 116: Saving document in machine readable format
- 120: Identifying relevant reference material
- 121: Accessing reference material
- 122: Vectorizing reference material
- 123: Comparing vectorized reference material to vectorized document (chunks)
- 124: Generating relevant reference material
- 130: Receiving user statement information
- 131: Saving user statement information
- 140: Generating question message
- 141: Sending question message to API
- 150: Identifying designated LLM
- 151: Selecting designated LLM
- 152: Adjusting token limits
- 153: Loading designated LLM
- 160: Vectorizing question message
- 161: Saving vectorized question message
- 170: Sending vectorized question message to designated LLM
- 171: Processing vectorized question message
- 172: Formatting results
- 173: Saving formatted results
- 180: Outputting formatted results
- 200: Document (Marketing material)
- 201: Extracted text and/or image information of document
- 202: At least one legal question
- 203: Relevant legal questions
- 204: Number of tokens
- 210: Question loop
- 220: Input query
- 230: reference material
- 231: Relevant reference material
- 240: Question message
- 250: User statement information
- 260: User output data
- 300: Question generator system
- 310: User data interface
- 311: Input module
- 312: Output module
- 320: Memory
- 330: Large language module interface
- 340: Question generator
- 350: User device
- 360: External database
- 370: Application Programming Interface (API)
- 380: Plurality of Large Language Models (LLMs)
- 381: Designated Large Language Model (LLM)
- 400: Homepage
- 401: Upload document
- 402: Information on current document table
- 403: Review feedback
- 404: Preview document
- 405: Upload revision
- 410: Upload page
- 411: Select file for upload
- 413: Configure
- 420: Configuration page
- 421: Submit
- 422: Select type of material
- 423: Select jurisdiction
- 424: Additional considerations
- 430: Processing page
- 440: Review feedback page
- 441: Download feedback
- 442: Report issue
- 443: Return to Homepage
- 444: Information on status of document
- 445: Information on review
- 450: Report issue page

## Claims

1. A method for automated review of documents (200) to be checked for compliance by using a large language model, the method comprising the steps of:
• providing a collection of legal questions (202) to an electronic question generator system (300);
• receiving, with the question generator system (300), electronic document data representing at least a part of a document (200) to be reviewed;
• generating (140), with the question generator system (300), at least one question message (240) for the large language model based on at least one part of the document data and at least one of the legal question (202) from the collection of legal questions (202);
• providing the question message (240) from the question generator system (300) to the large language model for processing the question message (240) in view of reference material (230); and
• receiving, with the question generator system (300), a response of the large language model to the question message (240).

2. The method according to claim 1, wherein the method further comprises the step of generating, with the question generator system (300) and based on the received response of the large language model, user output data (260).

3. The method according to any one of the preceding claims, wherein the question generator adds the reference material (230), parts of the reference material (230), and/or data extracted from the reference material (230) to the question message (240).

4. The method according to any one of the preceding claims, further comprising the step of automatically identifying (111), with the question generator system (300) and based on the document data, a document type of the document.

5. The method according to any one of the preceding claims, wherein the collection of legal questions (202) pre-stored in the question generator system (300).

6. The method according to any one of the preceding claims, wherein a user data interface (310) of the question generator system (300)
• prompts a user to select the at least one legal question (202) and/or
• prompts the user to confirm a suggestion for the at least one legal question (202).

7. The method according to any one of the preceding claims, wherein automatically generating (140) the at least one question message (240) is further based on user statement information (250) including specifications regarding the response from the large language model.

8. The method according to any one of the preceding claims, further comprising at least one of the following:
• vectorization of the document data and vectorization of the at least one legal question (202), wherein automatically generating (140) the question message (240) includes comparing the vectorized at least one legal question (202) and the vectorized document data in order to extract the at least one part of the document data from the document and/or at least one relevant legal question (203);
• vectorization of the reference material (230) and vectorization of the at least one legal question (202), wherein automatically generating (140) the question message (240) includes comparing the vectorized at least one legal question (202) and the vectorized reference material (230) in order to extract at least one relevant part from the reference material (231) and/or at least one relevant legal question (203); and
• vectorization of the document data and vectorization of the reference material (230), wherein automatically generating (140) the question message (240) includes comparing the vectorized document data and the vectorized reference material (230) in order to extract the at least one part of the document data from the document data and/or at least one relevant part from the reference material (231).

9. The method according to any one of the preceding claims, wherein the question generator system (300), after having received the response from the large language model, sends the response to a secondary large language model for determining if the response indicates compliance or non-compliance.

10. The method according to any one of the preceding claims, wherein the message generator system (300), after having received the response of the large language model indicating non-compliance of the document, generates and sends
• a recommendation message and/or
• a specific input request
for the user to perform a new check of a revised version of the document (200).

11. The method according to any one of the preceding claims, wherein the question generator system (300) extracts text and/or image information (112) from the received document data for use in generating (140) the question message (240).

12. The method according to claim 11, wherein the question generator system (300)
• initiates an initial tokenization (113) of the extracted text and/or image information (201), wherein the initial number of tokens (204) identified in the text and/or image information (112) is returned, and
• compares the identified number of tokens (204) to capacity standards for a plurality of large language models (380) to automatically identify (150) the one of the plurality of language models (380) with the most appropriate capacity standard for this document data as designated large language model (381),
• automatically selects (151) the designated large language model (381) for inputting the question message (240) or prompting the user to confirm using the designated large language model (381).

13. The method according to claim 12, wherein a maximum token limit is pre-set for at least one of the plurality of language models (380).

14. A question generator system (300) for performing an automated review of documents (200) to be checked for compliance by using a large language model, for example with a method according to any one of the preceding claims, the system comprising:
• a memory (320) storing a collection of legal questions (202);
• a user data interface (310) configured at least for input of document data;
• a question generator (340) configured for generating (140) a question message (240) for the large language model based on at least one part of the document data and at least one legal question (202) from the collection of legal questions (202);
a large language model interface (330) configured to access at least the large language model for providing the question message (240) to the large language model for processing the question message (240) in view of the reference material (230) and for receiving a response of the large language model to the question message (240).

15. The system according to claim 14, wherein the system additionally includes a tokenizer.
